# EUROPÄISCHE PATENTSCHRIFT

(11) **EP 2 892 795 B1**
(45) Veröffentlichungstag und Bekanntmachung des Hinweises auf die Patenterteilung: **10.01.2018**
(21) Anmeldenummer: 13801977.3
(22) Anmeldetag: 10.09.2013
(51) Int. Cl.: B62D 53/00, B62D 63/06

(54) **EINACHSIGES ROUTENZUGELEMENT MIT HUBVORRICHTUNG SOWIE FAHRGESTELL FÜR EIN EINACHSIGES ROUTENZUGELEMENT**
SINGLE-AXLE TUGGER TRAIN ELEMENT WITH A LIFTING DEVICE AND CHASSIS FOR A SINGLE-AXLE TUGGER TRAIN ELEMENT
ÉLÉMENT DE TRAIN DE REMORQUES UNIAXIAL MUNI D'UN DISPOSITIF DE LEVAGE, ET CHÂSSIS DESTINÉ À UN ÉLÉMENT DE TRAIN DE REMORQUES UNIAXIAL

(30) Priorität: 10.09.2012 DE 102012017838
(43) Veröffentlichungstag der Anmeldung: 15.07.2015
(73) Patentinhaber: BeeWaTec AG, 72793 Pfullingen (DE)
(72) Erfinder: WALTER, Hans-Peter, 72820 Sonnenbühl (DE); MYZIAK, Artur Pawel, PL-58-260 Bielawa (PL)
(74) Vertreter: Gosdin, Michael
(86) Internationale Anmeldenummer: PCT/DE2013/000502
(87) Internationale Veröffentlichungsnummer: WO 2014/036988

(56) Entgegenhaltungen:
- EP-A1- 2 415 635
- EP-A2- 2 487 067
- DE-A1-102005 055 235
- DE-A1-102011 080 857
- DE-U1- 20 313 955
- DE-U1-202012 002 489
- FR-A1- 2 879 989
- FR-A1- 2 979 609

## Beschreibung

Die vorliegende Erfindung betrifft ein einachsiges Routenzugelement, mit einem auf einer der beiden Längsseiten zumindest abschnittsweise offenen Fahrgestell (E-Frame), welches
- einen Längsholm, der parallel zur mittigen Längsachse des Routenzugelements angeordnet ist, und mindestens
- drei Querholme, die beabstandet voneinander in jeweils senkrechter Richtung mit dem Längsholm verbunden sind und so einen vorderen, einen mittleren und einen hinteren Fahrgestellabschnitt bilden, wobei der mittlere Fahrgestellabschnitt
   - zwei oder mehrere Räder, deren Achsen auf einer Linie liegend senkrecht zur Längsachse des Routenzugelements angeordnet sind, und
   - mindestens eine Hubvorrichtung
   aufweist, so dass auf der abschnittsweise offenen Längsseite des Fahrgestells ein fahrbares Transporthilfsmittel in das Routenzugelement, das anschließend angehoben wird, eingefahren werden kann, wobei der vordere Fahrgestellabschnitt und der hintere Fahrgestellabschnitt so angeordnet sind, dass beide bei einem in das Routenzugelement eingefahrenen Transporthilfsmittel im Bereich der Seitenflächen des Transporthilfsmittels positioniert sind, so dass weder der vordere Fahrgestellabschnitt noch der hintere Fahrgestellabschnitt an dem Hubvorgang, der allein durch die im mittleren Fahrgestellabschnitt angeordnete Hubvorrichtung bewirkt wird, beteiligt sind.

Ein solches Routenzugelement ist aus der DE 10 2011 080 857 A1 bekannt. Ähnliche und andere Lösungen zeigen die DE 10 2005 055 235 A1 und die EP 2415635 A1.

In der industriellen Fertigung und im Bereich der modernen Lagerhaltung dienen fahrbare Trolleys, Regalwagen, bzw. Palettenwagen, die im Zusammenhang mit der vorliegenden Erfindung zusammenfassend als fahrbare Transporthilfsmittel bezeichnet werden, der portionsweisen Bereitstellung und Bereithaltung von Einzelteilen.

Zur effizienten Bewegung von fahrbaren Transporthilfsmitteln über längere Distanzen innerhalb einer Produktionsstätte werden mehrere Routenzugelemente einem Güterzug ähnlich miteinander verbunden. Routenzugelemente werden an anderer Stelle als Anhänger für Trailerzüge bezeichnet.

Routenzugelemente mit einem sogenannten "E-Frame" als Tragrahmen, bzw. als Fahrgestell, sind bereits aus DE 603 00 189 T2 und aus DE 10 2007 022 525 A1 bekannt. Die Bezeichnung "E-Frame" beschreibt die Struktur des Fahrgestells dieser Routenzugelemente, deren wesentliche Bestandteile in der Aufsicht an die Struktur des Buchstabens "E" erinnern. Ein "E-Frame-Fahrgestell" ist auf der dem Längsholm gegenüberliegenden Längsseite zumindest abschnittweise offen, so dass die fahrbaren Transporthilfsmittel in das Fahrgestell hinein bewegt werden können.

Der mittlere Fahrgestellabschnitt, der am mittleren Querholm des E-Frames angeordnet ist, weist ein Fahrwerk auf, das zwei oder mehrere Räder umfasst. Bei einem einachsigen Routenzugelement liegen die Radachsen aller Räder dabei auf einer Linie, so dass das Fahrverhalten des E-Frame-Fahrgestells, dem eines einachsigen Anhängers entspricht.

Zum Aufbau eines Zugs aus mehreren Routenzugelementen weist der vordere Fahrgestellabschnitt eines jeden Routenzugelements zusätzlich eine in der Längsachse des Routenzugelements liegende Deichsel mit einer endständigen ringförmigen Öffnung auf, während der hintere Fahrgestellabschnitt zur Aufnahme der Öffnung der Deichsel eines nachfolgenden Routenzugelements eine entsprechende Anhängevorrichtung aufweist. Die Deichsel des ersten Routenzugelements ist mit einer Zugmaschine verbunden. Die wesentlichen Bestandteile eines aus dem Stand der Technik bekannten einachsigen Anhängers mit einem Fahrgestell mit E-Frame, das als Routenzugelement dient, umfassen somit
- einen Längsholm, der parallel zur mittigen Längsachse des Routenzugelements angeordnet ist, und mindestens
- drei Querholme, die voneinander beabstandet und in jeweils senkrechter Richtung mit dem Längsholm verbunden sind und so einen vorderen, einen mittleren und einen hinteren Fahrgestellabschnitt bilden, mit zwei Rädern im mittleren Fahrgestellabschnitt sowie
- eine Deichsel im Bereich des vorderen Fahrgestellabschnitts, und
- eine Anhängevorrichtung im Bereich des hinteren Fahrgestellabschnitts.

Im Verbund eines Routenzugs ermöglichen Routenzugelemente die gleichzeitige Bewegung einer Vielzahl von fahrbaren Transporthilfsmitteln durch nur eine Person. Bei schwer beladenen Transporthilfsmitteln ist der Einsatz von Routenzugelementen bereits zur Bewegung von nur wenigen Transporthilfsmitteln sinnvoll.

Bekannt sind Routenzugelemente ohne Hubvorrichtung oder mit Hubvorrichtung. Routenzugelemente ohne Hubvorrichtung sind zum Beispiel in den Dokumenten DE 603 00189 T2 und FR 2 888 200 offenbart. Bei einem Routenzugelement mit E-Frame-Fahrgestell, das keine Hubvorrichtung aufweist, wird das von der Seite in das Routenzugelement eingeschobene fahrbare Transporthilfsmittel nicht angehoben und rollt während der Bewegung im Routenzug auf seinen eigenen Rädern, bzw. eigenen Rollen. In diesem Fall dient das jeweilige Routenzugelement also allein der Mitnahme des Transporthilfsmittels.

Dabei ist nachteilig, dass die Rollen des Transporthilfsmittels einem hohen Verschleiß ausgesetzt sind. Aufgrund der großen Zahl der in der industriellen Fertigung und Lagerhaltung eingesetzten Transporthilfsmittel stellt die Schonung der an den Transporthilfsmitteln angebrachten Rollen einen beachtlichen Kostenvorteil dar. Außerdem haben die aus DE 603 00189 T2 und FR 2 888 200 bekannten Routenzugelemente den Nachteil, dass die mitgeführten und schwer beladenen Transporthilfsmittel beim Durchfahren enger Kurven aus der gebogen verlaufenden Fahrspur ausbrechen.

Zur Erleichterung des Transports von schwer beladenen Transporthilfsmitteln sowie zur Schonung der Rollen, Lenkrollen oder Räder der fahrbaren Transporthilfsmittel, wurden Routenzugelemente mit einer Hubvorrichtung ausgestattet.

Ein einachsiges Routenzugelement (Anhänger für einen Trailerzug) mit Hubvorrichtung ist aus dem Dokument DE 10 2008 060 962 A1, bzw. der nachfolgenden europäischen Patentanmeldung EP 2 161 182 A2, bekannt. In dieses Routenzugelement kann ein fahrbares Transporthilfsmittel (Innenwagen) eingefahren werden, wobei der Innenwagen im Transportzustand des Trailerzugs unter vollständiger Entlastung der innenwagenseitigen Lenkrollen gewichtsübertragend am Anhängerrahmen und über diesen auf den anhängerseitigen Führungsrollen abgestützt ist, wozu der gesamte Anhängerrahmen als Einheit durch eine zwischen diesem und der Drehachse der anhängerseitigen Führungsrollen angeordnete anhängerfeste Hubeinrichtung zwischen einer zur Aufnahme des Innenwagens abgesenkten Bereitschaftslage und einer gemeinsam mit diesem angehobenen Transportlage höhenverstellbar ist. In EP 2 311 673 A2 wird eine Weiterentwicklung des Routenzugelements aus EP 2 161 182 A2 offenbart. Die Weiterentwicklung zeichnet sich dadurch aus, dass die Hubvorrichtung einen hydraulischen Druck erzeugende Pumpe mit Rotationsantrieb aufweist, wobei der Rotationsantrieb über ein Getriebe mit wenigstens einem der am Boden abrollenden Räder des E-Frame-Fahrgestells gekoppelt ist.

Die aus EP 2 311 673 A2 und EP 2 161 182 A2 bekannten Routenzugelemente sollen den Transport von voll beladenen und dementsprechend schweren Transporthilfsmitteln erleichtern, wobei zugleich das Fahrverhalten des Routenzugelements bei enger Kurvenfahrt verbessert werden soll. Zu diesem Zweck wird das Transporthilfsmittel mit Hilfe der elektrisch oder pneumatisch angetriebenen Hubvorrichtung jeweils komplett ausgehoben, so dass auf den Rädern des Transporthilfsmittels keine Last mehr ruht. Aus diesem Grund weist der Anhängerrahmen im vorderen Fahrgestellabschnitt und hinteren Fahrgestellabschnitt gewichtsaufnehmende Teile auf, die neben dem mittleren Fahrgestellabschnitt, auf deren Oberseite das Transporthilfsmittel aufliegt, an der Aushebung des Transporthilfsmittels beteiligt sind.

Im Transportzustand ist das Transporthilfsmittel bei den aus EP 2 311 673 A2 und EP 2 161 182 A2 bekannten Routenzugelementen komplett ausgehoben, wobei das Transporthilfsmittel unter vollständiger Entlastung seiner Rollen (Lenkrollen) gewichtsübertragend am Anhängerrahmen abgestützt ist. D.h. neben dem mittleren Fahrgestellabschnitt sind auch der vordere und der hintere Fahrgestellabschnitt gleichermaßen an der Abstützung des Transporthilfsmittels beteiligt.

Auch während des Hubvorgangs liegt das Transporthilfsmittel bei dem aus EP 2 311 673 A2 und EP 2 161 182 A2 bekannten Routenzugelement unter vollständiger Entlastung der Lenkrollen mit seinem gesamten untenseitigen Rahmen auf dem vorderen, mittleren und dem hinteren Fahrgestellabschnitt des Routenzugelements auf.

Eine auf der Unterseite des Transporthilfsmittels ausschließlich mittig ansetzende Hubvorrichtung ist bei den aus EP 2 311 673 A2 und EP 2 161 182 A2 bekannten Routenzugelementen nicht vorgesehen.

Weiterhin ist in EP 2 311 673 A2 und EP 2 161 182 A2 nicht offenbart, dass bereits ein nur entlastendes Anheben, d.h. ein nicht vollständiges Anheben der Transporthilfsmittel, die Fahreigenschaften des gesamten Routenzugs bereits erheblich verbessert.

Durch das vollständige Ausheben eines Transporthilfsmittels mit einem bekannten einachsigen Routenzugelement wird das Gewicht des Transporthilfsmittels jeweils von ursprünglich vier Rädern auf nur zwei Räder des einachsigen Routenzugelements verlagert. Dadurch liegt das Transporthilfsmittel mit seinem gesamten Gewicht auf dem Fahrgestell des Routenzugelements, das durch seine Deichsel jeweils lösbar mit mindestens einem weiteren Routenzugelement verbunden ist, auf. Bei der Fahrt auf unebenem Untergrund führt die Deichsel eine schlagende nach oben oder nach unten gerichtete Bewegung aus. Bei einer Vielzahl von aufeinander folgenden Unebenheiten kann diese Bewegung der entsprechenden Bewegung des voranlaufenden Routenzugelementes entgegen gerichtet sein, so dass die Deichsel und die Fahrgestelle der Routenzugelemente hohen Belastungen ausgesetzt sind. Die damit verbundenen Erschütterungen beeinträchtigen das Fahrverhalten des gesamten Routenzugs und verursachen in der Elektronik von hydraulisch, pneumatisch oder elektronisch angetriebenen Hubvorrichtungen einen hohen Ausfall und Wartungsaufwand. Außerdem entsteht aufgrund des unruhigen Laufverhaltens des gesamten Routenzugs zusätzlicher unerwünschter Lärm.

Die genannten Nachteile der bekannten einachsigen mit einer Hubvorrichtung ausgestatteten Routenzugelemente wirken sich jedoch nicht nur bei unebenen Bodenverhältnissen nachteilig aus, sondern sind auch unvorteilhaft, wenn im Seitenbild terrassenförmig angelegte Steigungen zu überwinden sind.

Vor diesem Hintergrund besteht die Aufgabe der Erfindung in der Bereitstellung eines Fahrgestells mit Hubvorrichtung für ein Routenzugelement, bzw. in der Bereitstellung eines Routenzugelements, das verbesserte Laufeigenschaften aufweist und das zugleich zur Schonung der Rollen der fahrbaren Transporthilfsmittel beiträgt.

Insbesondere besteht die Aufgabe der Erfindung in der Bereitstellung eines Fahrgestells mit Hubvorrichtung für ein Routenzugelement, bzw. eines Routenzugelements, das bei der Bewegung des Routenzugs auf unebenem Untergrund sowie beim Überwinden von Steigungen, insbesondere beim Überwinden von im Seitenbild terrassenförmig angelegten Steigungen, wie sie bei an einer Hanglage gebauten Gebäuden auftreten, verbesserte Laufeigenschaften aufweist, und zugleich die Rollen der fahrbaren Transporthilfsmittel schont.

Die Aufgabe wird gelöst durch ein Routenzugelement gemäß Anspruch 1.

Das erfindungsgemäße einachsige Routenzugelement bzw. das erfindungsgemäße Fahrgestell in Verbindung mit einem Routenzugelement, erlaubt es, dass ein in das Routenzugelement eingefahrenes Transporthilfsmittel allein durch die mittig positionierte Hubvorrichtung angehoben, bzw. ausgehoben, wird. Das Fahrgestell des Routenzugelements ist dadurch gekennzeichnet, dass
- der vordere Fahrgestellabschnitt, bzw. der den vorderen Fahrgestellabschnitt bildende Querholm, und auch die weiteren mit dem vorderen Querholm verbundenen Teile, sowie
- der den hinteren Fahrgestellabschnitt, bzw. der den hinteren Fahrgestellabschnitt bildende Querholm und auch die weiteren mit dem hinteren Querholm verbundenen Teile,
bei dem in das Routenzugelement eingefahrenen Transporthilfsmittel (Innenwagen) jeweils ausschließlich oberhalb der Unterseite des Transporthilfsmittels, d.h. im Bereich der Seitenflächen des Transporthilfsmittels, positioniert ist, wobei der Antrieb der Hubvorrichtung bzw. der Hubvorrichtungen mittels einer oder mehrerer Druckfedern erfolgt, wobei die Druckfedern so angeordnet sind, dass sie mittels einer durch Muskelkraft bedienbaren Spannvorrichtung komprimierbar sind.

Durch die in Bezug auf das Transporthilfsmittel ausschließlich seitliche Positionierung des vorderen Querholms und des hinteren Querholms, bzw. durch die in Bezug auf das Transporthilfsmittel ausschließlich seitliche Positionierung der jeweils mit dem vorderen Querholm oder dem hinteren Querholm verbundenen Teile, ist weder der vordere Fahrgestellabschnitt noch der hintere Fahrgestellabschnitt am Anheben, bzw. am Ausheben, des Transporthilfsmittels beteiligt.

Dies bewirkt, dass alleine die im Bereich des mittleren Fahrgestellabschnitts angeordnete Hubvorrichtung den Hubvorgang des Transporthilfsmittels bewirkt, während weder auf den vorderen noch auf den hinteren Fahrgestellabschnitt das Gewicht des Transporthilfsmittels, bzw. Teile derselben, übertragen wird.

Beim erfindungsgemäßen E-Frame-Fahrgestell ist das fahrbare Transporthilfsmittel (Innenwagen) also nicht gewichtsübertragend am Anhängerrahmen (Fahrgestellrahmen) abgestützt, sondern wird alleine durch den mittleren Teil des Fahrgestellrahmens abgestützt. Dies bewirkt, dass der Fahrgestellrahmen in Bezug auf das eingefahrene Transporthilfsmittel, sowie dass das eingefahrene Transporthilfsmittel in Bezug auf das Fahrgestell, eine Pendelbewegung ausführen kann.

Die Pendelbewegung ist möglich, weil das Transporthilfsmittel während der Bewegung des Routenzugs ausschließlich auf dem mittleren Fahrgestellabschnitt aufliegt, wobei am mittleren Fahrgestellabschnitt auch die Achse der zum Fahrgestell gehörenden Räder angeordnet ist, aufliegt. Die Pendelbewegung ist auch dann möglich, wenn das Transporthilfsmittel nicht vollständig ausgehoben wird, sondern nur gewichtsentlastend angehoben wird.

Der vordere und der hintere Fahrgestellabschnitt hat keine tragende, d.h. gewichtsaufnehmende Funktion, sondern beide bewirken während der Bewegung des Routenzugs lediglich die seitliche Stabilisierung des Transporthilfsmittels. Die seitliche Stabilisierung einer mit einer im Bereich des mittleren Fahrgestellabschnitts positionierten Hubvorrichtung kann auch dann erforderlich sein, wenn die Hubvorrichtung nicht exakt mittig positioniert ist. Dabei kann sich das Transporthilfsmittel, unabhängig von der jeweiligen Lage des auf dem mittleren Fahrgestellabschnitt lagernden Transporthilfsmittels, in Bezug auf die im Bereich des mittleren Fahrgestellabschnitts angeordnete Achse des Fahrgestells, zu beiden Seiten neigen und dadurch die genannte Pendelbewegung ausführen.

Der Kern der Erfindung besteht somit darin, dass
- der vordere Fahrgestellabschnitt, bzw. der den vorderen Fahrgestellabschnitt bildende Querholm, und auch die weiteren mit dem vorderen Querholm verbundenen Teile, sowie
- der den hinteren Fahrgestellabschnitt, bzw. der den hinteren Fahrgestellabschnitt bildende Querholm, und auch die weiteren mit dem hinteren Querholm verbundenen Teile,
nicht am Hubvorgang eines in das Routenzugelement eingefahrenen und teilweise angehobenen oder vollständig ausgehobenen, Transporthilfsmittel beteiligt sind, wobei der Antrieb der Hubvorrichtung bzw. der Hubvorrichtungen mittels einer oder mehrerer Druckfedern erfolgt, wobei die Druckfedern so angeordnet sind, dass sie mittels einer durch Muskelkraft bedienbaren Spannvorrichtung komprimierbar sind.

Dies wird dadurch erreicht, dass der vordere Fahrgestellabschnitt und der hintere Fahrgestellabschnitt, sowie die mit diesen verbundenen Teile, jeweils ausschließlich oberhalb der Unterseite des Transporthilfsmittels im Bereich der Seitenflächen des Transporthilfsmittels positioniert sind, so dass allein der mittlere Fahrgestellabschnitt unterhalb der Unterseite des anzuhebenden Transporthilfsmittels positioniert ist.

Dadurch wird das Anheben, bzw. das komplette Ausheben, des Transporthilfsmittels allein durch die im Bereich des mittleren Fahrgestellabschnitts angeordnete Hubvorrichtung bewirkt. Dabei wird nur der die Räder aufweisende mittlere Fahrgestellabschnitt des Routenzugelements belastet, während das Fahrgestell des Routenzugelements im Übrigen, d.h. der vordere und hintere Teil des Fahrgestells, unbelastet bleibt. Aus diesem Grund bleibt der durch den vorderen Querholm, den hinteren Querholm und den Längsholm gebildete Teil des Fahrgestells in Bezug auf ein in das Fahrgestell eingefahrenes Transportmittel beweglich. Diese Beweglichkeit bewirkt im Verbund eines aus mehreren Routenzugelementen bestehenden Routenzugs, dass der Routenzug bei der Fahrt über Unebenheiten eine insgesamt wellenartige Ausgleichsbewegung ausführen kann.

Die erläuterte Ausgleichsbewegung der Routenzugelemente, bzw. die Ausgleichsbewegung der Fahrgestelle der Routenzugelemente, hat den Vorteil, dass die auf die Routenzugelemente und deren technische Komponenten (insbesondere auf die Hubvorrichtungen) übertragenen Erschütterungen verringert werden. Dadurch wird die Verschleißanfälligkeit der Routenzugelemente insgesamt herabgesetzt. Außerdem kann durch die pendelnde Ausgleichsbewegung auch das in den fahrbaren Transporthilfsmitteln lagernde und oftmals sehr wertvolle Transportgut vor Erschütterungen und somit vor Beschädigung geschützt werden.

Bei einer bevorzugten Ausführungsform des Routenzugelements ist am vorderen Fahrgestellabschnitt eine Deichsel und an dem hinteren Fahrgestellabschnitt eine Anhängevorrichtung angeordnet. Dabei ist vorgesehen, dass die Deichsel und die Anhängevorrichtung jeweils mittig, d.h. auf der Längsachse des Fahrgestells liegend, angeordnet sind. Daneben ist jedoch auch eine Ausführungsform denkbar, bei welcher die Anordnung der Deichsel und der Anhängevorrichtung, ausgehend von der Längsachse des Fahrgestells in Richtung des Längsholms des Fahrgestells, verschoben ist.

In einer weiteren bevorzugten Ausführungsform weist das Routenzugelement im Bereich des mittleren Fahrgestellabschnitts mindestens zwei Hubvorrichtungen auf, die voneinander beabstandet angeordnet sind. Der Einbau mehrerer Hubvorrichtungen, anstatt nur einer Hubvorrichtung, erlaubt es, dass die Bestandteile der Hubvorrichtungen kleiner dimensioniert sein können, so dass die Hubvorrichtung insgesamt kleiner ist und somit weniger Platz einnimmt. Dies ist besonders dann von Vorteil, wenn die Anordnung des Antriebs auf den mittleren Fahrgestellabschnitt des Routenzugelements beschränkt bleiben soll.

Nach Komprimierung der Druckfedern ist die Hubvorrichtung, bzw. sind die Hubvorrichtungen, im aktivierten Zustand. Die Druckfedern können an den Bestandteilen des Fahrgestells auf verschiedenste Weise angeordnet sein. Zur Vereinfachung der Kraftübertragung ist es jedoch von Vorteil, wenn die Druckfedern im mittleren Fahrgestellabschnitt angeordnet sind, wobei die Ausdehnung der Druckfedern in die vertikale Richtung, d.h. in die Hubrichtung, erfolgt.

In einer ganz besonders bevorzugten Ausführungsform eines mechanisch angetriebenen Routenzugelements ist vorgesehen, dass im Bereich des mittleren Fahrgestellabschnitts zwei Hubvorrichtungen angeordnet sind. Zur gleichmäßigen Verteilung der Last sind die Hubvorrichtungen auf dem mittleren Fahrgestellabschnitt beabstandet voneinander angebracht. Für den Antrieb jeder Hubvorrichtung sind jeweils zwei bis acht Druckfedern vorgesehen. Die jeweilige Länge der einzelnen Druckfeder liegt im Bereich zwischen 75 mm und 150 mm. Eine Druckfederlänge im Bereich von 100 mm bis 120 mm ist bevorzugt, wenn der Durchmesser des für die Herstellung der Druckfeder eingesetzten Federstahldrahts im Bereich von 2 mm bis 4 mm liegt. Bei dem Einsatz von jeweils sechs Druckfedern je Hubvorrichtung sind Druckfedern besonders bevorzugt, die eine Länge von 110 mm aufweisen, wobei der Durchmesser des für die Herstellung der Druckfedern verwendeten Federstahldrahts 2,5 mm besonders bevorzugt ist.

Die Art der einsetzbaren Druckfedern ist dem Fachmann bekannt und in einem weiten Bereich variabel. Zylindrische Schraubendruckfedern aus runden Stäben sind besonders geeignet. Die Druckfedern bestehen bevorzugt aus rundem Federstahldraht nach DIN EN 10270-1 oder aus Federdraht nach DIN EN 10270-3.

In Weiterbildung des mechanisch angetriebenen Routenzugelements weist die durch Muskelkraft bedienbare, im Bereich des mittleren Fahrgestellabschnitts angeordnete und somit vom mittleren Querholm getragene Spannvorrichtung, die der Komprimierung (Aktivierung) der zu den Hubvorrichtungen gehörenden Druckfedern dient, einen Spannhebel, eine Anschlagleiste, zwei oder mehrere Ankerschrauben sowie weitere Elemente zum Aufbau einer Arretierungsvorrichtung der Spannvorrichtung auf.

Der Spannhebel ist als Hebelarm auf der Spannhebelachse drehbar gelagert angeordnet. Die Achse des Spannhebels ist dabei nicht mittig, sondern zur Erhöhung der Hebelwirkung, möglichst weit vom Pedalabschnitt des Spannhebels beabstandet, angeordnet.

Die Anschlagleiste ist in vertikale Richtung beweglich, wobei zwei oder mehrere Ankerschrauben die Vertikalbewegung der Anschlagleiste begrenzen.

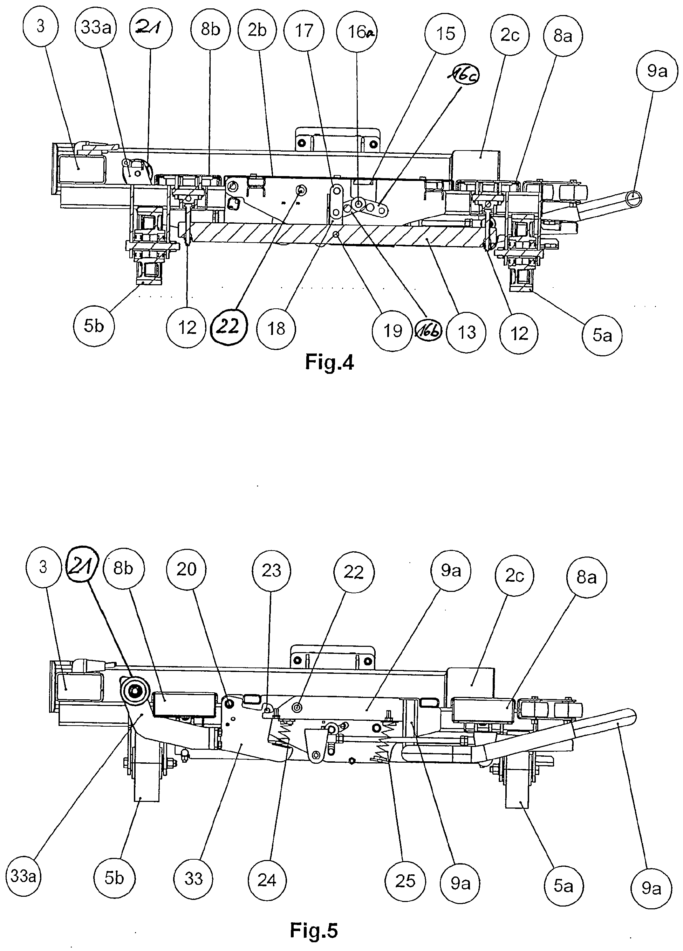

Die bevorzugte Arretierung der Spannvorrichtung erfolgt mittels eines Kniehebels, der gebildet wird durch eine Lasche, eine Hebelrolle sowie einen ersten Hebel und einen weiteren Hebel, der durch eine Achse an der Anschlagleiste drehbar angeordnet ist. Die Funktionsweise der Spannvorrichtung ist in Fig. 4 im Detail erläutert.

In Weiterbildung des mechanisch angetriebenen Routenzugelements ist die durch Muskelkraft bedienbare Spannvorrichtung, die der Komprimierung (Aktivierung) der zu den Hubvorrichtungen gehörenden Druckfedern dient, mit einer Sicherung des Transporthilfsmittels (Transporthilfsmittelsicherung) mechanisch gekoppelt. Die Sicherungsvorrichtung umfasst einen Sicherungshebel, der in etwa mittig, d.h. im Bereich seines mittleren Abschnitts auf einer Achse drehbar, gelagert ist. Die mechanische Koppelung zwischen Spannvorrichtung und Sicherungsvorrichtung erfolgt dadurch, dass der benachbart zur Spannvorrichtung positionierte erste Endabschnitt des Sicherungshebels durch einen Bolzen (Kopplungsbolzen) drehbar mit einem Endabschnitt des auf einer Achse ebenfalls drehbar gelagerten Spannhebels verbunden ist.

Der zweite freie Endabschnitt des Sicherungshebels weist eine oder mehrere Rollen auf, die bei Aktivierung der Sicherung in einen Freiraum auf der Unterseite eines Transporthilfsmittels, das in das Routenzugelement eingefahren ist, eingreifen. Durch das Eingreifen des freien Endabschnitts des Sicherungshebels wird das Transporthilfsmittel gesichert, so dass dieses während der Fahrt des Routenzugs nicht aus dem Routenzugelement herausgleiten kann. Aufgrund der Koppelung zwischen dem Spannhebel und dem ersten Endabschnitt des Sicherungshebels durch den Kopplungsbolzen bewirkt eine Abwärtsbewegung des Spannhebels in dessen Pedalabschnitt bei Aktivierung der Spannvorrichtung zugleich auch eine Abwärtsbewegung des freien Endabschnitts des Sicherungshebels. Die Funktionsweise der Transporthilfsmittelsicherung ist in Fig. 5 im Detail erläutert.

In Weiterbildung des mittels Druckfedern mechanisch angetriebenen Routenzugelements weist dasselbe eine Vorrichtung zur Auslösung (Auslösevorrichtung) des Hubvorgangs aus. Die Auslösevorrichtung erlaubt die kontrollierte Aufhebung der Komprimierung der Druckfedern.

Die Auslösevorrichtung umfasst entweder
- einen um eine Achse drehbar gelagerten und mittels Muskelkraft, d.h. durch die von einem menschlichen Fuß ausgehende Muskelkraft, betätigbaren Auslöser, oder alternativ
- mindestens ein im Bereich des Längsholms drehbar gelagertes Anschlagelement, das ebenfalls als Auslöser wirkt und unter dem Anpressdruck der Rückseite eines in das Routenzugelement eingeschobenen Transporthilfsmittels betätigbar ist.

Beide Alternativen des Auslösers sind jeweils verbunden mit einer Zugstange (26), die anderenends durch die Achse (32) mit der Lasche (29) verbunden ist.

Die Bewegung der Lasche bei Betätigung des Auslösers bewirkt die Aufhebung der durch die Aktivierung der Druckfedern durch die oben genannten Elemente und Hebel der Sicherungsvorrichtung jeweils nur temporär aufgebauten Kniehebelposition.

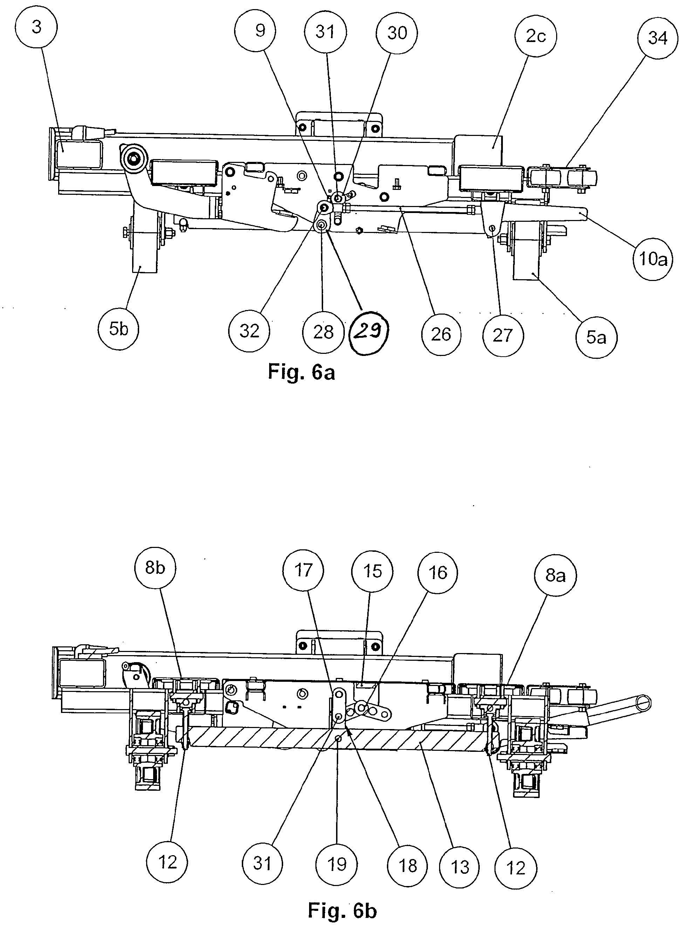

Die Funktionsweise zweier Auslösevorrichtungen ist in Fig. 6a und 6b sowie in 6c und 6d im Detail erläutert.

In einer ganz besonders bevorzugten Ausführung des Routenzugelements ist vorgesehen, dass die Hubvorrichtung, bzw. die Hubvorrichtungen, obenseitig jeweils mit einem schalldämpfenden Material belegt sind. Das schalldämpfende Material soll den insbesondere bei einer mit Druckfedern betriebenen Hubvorrichtung im Moment der Betätigung des Auslösers auftretenden Lärm mindern. Es ist vorteilhaft, wenn das schalldämpfende Material zugleich eine Oberfläche mit verbesserten Hafteigenschaften aufweist. Dadurch wird erreicht, dass das auf den Hubvorrichtungen aufliegende Transporthilfsmittel während des Transports nicht verrutschen kann.

Anstatt der flächigen Gestaltung der Oberseite der Hubvorrichtungen ist auch denkbar, dass diese eine im Querschnitt halbrunde Oberseite aufweisen. Eine im Querschnitt halbrunde Oberseite der Hubvorrichtungen erlaubt dem angehobenen Transporthilfsmittel eine Pendelbewegung, wobei der vordere Fahrgestellabschnitt und der hintere Fahrgestellabschnitt ein in das Routenzugelement eingefahrenes Transporthilfsmittel bei der Pendelbewegung seitlich stabilisieren.

Ein weiterer Aspekt der Erfindung betrifft ein Fahrgestell, das einen Teil der Merkmale des im Zusammenhang mit dem oben genannten Routenzugelement erläuterten Fahrgestells aufweist.

Das Fahrgestell hat einen E-förmigen Rahmen, d.h. es ist auf einer der beiden Längsseiten zumindest abschnittsweise offen und weist einen Längsholm, der parallel zur mittigen Längsachse des Routenzugelements angeordnet ist, und mindestens drei Querholme, die beabstandet voneinander in jeweils senkrechter Richtung mit dem Längsholm verbunden sind und so einen vorderen, einen mittleren und einen hinteren Fahrgestellabschnitt bilden, wobei sowohl der vordere Fahrgestellabschnitt als auch der hintere Fahrgestellabschnitt so angeordnet ist, dass diese bei einem in das Fahrgestell eingefahrenen Transporthilfsmittel jeweils ausschließlich oberhalb der Unterseite des Transporthilfsmittels im Bereich der Seitenflächen des Transporthilfsmittels positioniert sind.

Durch die in Bezug auf die Unterseite des Transporthilfsmittels höher liegende Positionierung wird erreicht, dass weder der vordere Fahrgestellabschnitt noch der hintere Fahrgestellabschnitt an dem Hubvorgang beteiligt sind. Der Hubvorgang wird allein durch die im mittleren Fahrgestellabschnitt angeordnete Hubvorrichtung bewirkt. Die damit verbundenen Vorteile wurden im Zusammenhang mit dem erfindungsgemäßen Routenzugelement oben erläutert.

Durch die Anordnung von zwei oder mehr Rädern, deren Achsen im Bereich des mittleren Fahrgestellabschnitts auf einer Linie liegen und senkrecht zur Längsachse des Routenzugelements orientiert sind, erhält man ein fahrbares Fahrgestell, dessen Fahrverhalten dem eines einachsigen Anhängers entspricht. Durch die zusätzliche Anordnung mindestens einer Hubvorrichtung zum Anheben eines Transporthilfsmittels im Bereich des mittleren Fahrgestellabschnitts erhält man ein einachsiges Routenzugelement mit den oben genannten Vorteilen.

Bei einer besonderen Ausführungsform des Fahrgestells ist vorgesehen, dass im Bereich des mittleren Fahrgestellabschnitts mindestens eine Hubvorrichtung angeordnet ist, wobei der Antrieb der Hubvorrichtung durch einen Elektromotor entweder mechanisch mittels einer Gewindespindel, pneumatisch oder hydraulisch erfolgt.

Bei einer alternativen besonderen Ausführungsform des Fahrgestells ist vorgesehen, dass im Bereich des mittleren Fahrgestellabschnitts, jeweils beabstandet voneinander, zwei oder mehrere Hubvorrichtungen angeordnet sind, wobei der Antrieb der Hubvorrichtungen mechanisch mittels einer oder mehrerer Druckfedern erfolgt, und wobei die Druckfedern so angeordnet sind, dass sie mittels einer ebenfalls im Bereich des Fahrgestells angeordneten und durch Muskelkraft betätigbaren Spannvorrichtung, komprimierbar sind.

Die Verwendung eines Fahrgestells in einer der vorgenannten Ausführungsformen ermöglicht die Bereitstellung von Routenzugelementen in verschiedensten Ausführungen, wobei die Routenzugelemente jeweils dadurch gekennzeichnet sind, dass ein in das Routenzugelement eingefahrenes Transporthilfsmittel nur vom mittleren Fahrgestellabschnitt angehoben, bzw. ausgehoben, wird.

### BEISPIELE

- Fig. 1a: Routenzugelement in perspektivischer Darstellung
- Fig. 1b: Routenzugelement in perspektivischer Darstellung mit eingefahrenem Transporthilfsmittel (Palettenwagen/Trolley)
- Fig. 2: Routenzugelement in der Seitenansicht
- Fig. 3a: Mittlerer Fahrgestellabschnitt - Querschnitt senkrecht zur Radachse - Aufbau und Funktion der Hubvorrichtungen
- Fig. 3b: Mittlerer Fahrgestellabschnitt - Querschnitt der Seitenansicht des mittleren Fahrgestellabschnitts parallel zur Radachse - Fixierung der zur Hubvorrichtung gehörenden Druckfedern
- Fig. 4: Mittlerer Fahrgestellabschnitt - Querschnitt der Seitenansicht des mittleren Fahrgestellabschnitts auf Höhe der Radachse - Funktion der Spannvorrichtung
- Fig. 5: Mittlerer Fahrgestellabschnitt - Querschnitt der Seitenansicht des mittleren Fahrgestellabschnitts parallel zur Radachse - Funktion der Transportmittelsicherung
- Fig. 6a: Mittlerer Fahrgestellabschnitt in der Seitenansicht - Funktion des Auslösers
- Fig. 6b: Mittlerer Fahrgestellabschnitt - Querschnitt der Seitenansicht des mittleren Fahrgestellabschnitts auf Höhe der Radachse - Wirkungsweise des Auslösers bei der Auslösung des Hubvorgangs
- Fig.6c: Mittlerer Fahrgestellabschnitt mit Anschlagelementen in perspektivischer Darstellung
- Fig. 6d: Mittlerer Fahrgestellabschnitt mit Anschlagelementen im Querschnitt

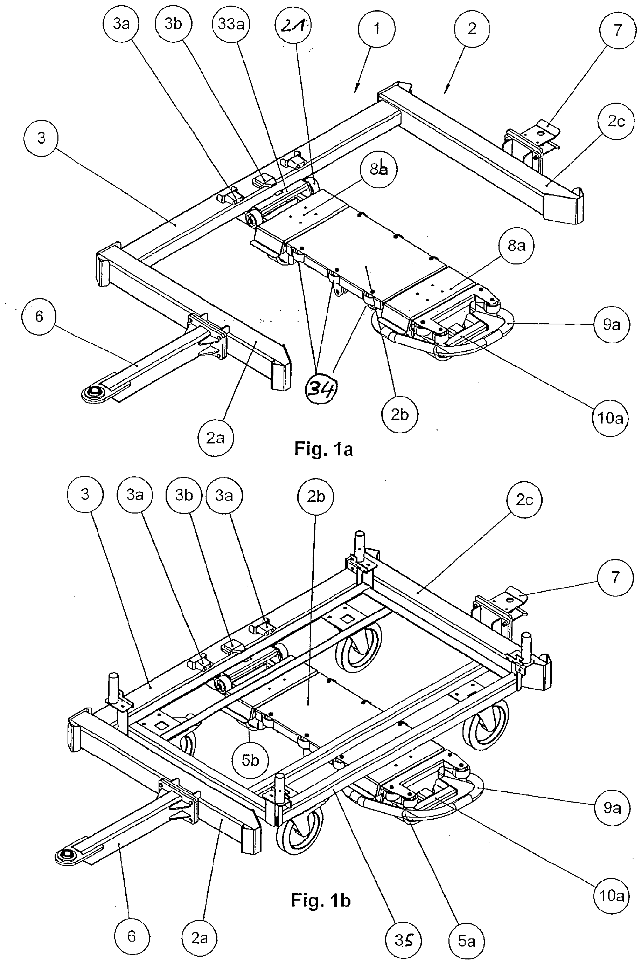

Fig.1a zeigt ein einachsiges Routenzugelement 1 in perspektivischer Darstellung.

Das Fahrgestell 2 des Routenzugelements 1 weist in der Aufsicht die Struktur des Buchstabens "E" auf. Das Fahrgestell 2 gliedert sich in den vorderen Fahrgestellabschnitt 2a, in den mittleren Fahrgestellabschnitt 2b und in den hinteren Fahrgestellabschnitt 2c.

Der vordere Fahrgestellabschnitt 2a ist mit einer Deichsel 6 und der hintere Fahrgestellabschnitt 2c mit einer Anhängevorrichtung 7 verbunden. Durch das Aneinanderhängen von mehreren Routenzugelementen 1 mit Hilfe der Deichsel 6 und der Anhängevorrichtung 7 wird die Bewegung einer Vielzahl von Routenzugelementen 1 im Verbund möglich.

Im Bereich des mittleren Fahrgestellabschnitts 2b sind die Hubvorrichtungen 8a, 8b angeordnet. Bei dem in Fig. 1a gezeigten Beispiel sind die Hubvorrichtungen 8a, 8b als zwei Plattformen, welche die höchsten Punkte auf der Oberseite des mittleren Fahrgestellabschnitts 2b bilden, ausgeführt. Die Position des vorderen Fahrgestellabschnitts 2a und des hinteren Fahrgestellabschnitts 2c bleibt während der Hubbewegung der Hubvorrichtungen 8a, 8b unverändert, d.h. die Hubbewegung der Hubvorrichtungen 8a, 8b erfolgt unabhängig vom vorderen Fahrgestellabschnitt 2a und vom hinteren Fahrgestellabschnitt 2c. Außerdem weisen weder der vordere Fahrgestellabschnitt 2a noch der hintere Fahrgestellabschnitt 2c Teile oder Auflageflächen auf, welche eine gewichtsübertragende Aufnahme eines Transporthilfsmittels 35 ermöglichen könnten.

Am Längsholm 3 des Fahrgestells sind die beiden Endanschläge 3a, die aus Gummi bestehen oder zumindest vorderseits mit Gummi belegt sind, sowie eine Zentrierung 3b, montiert. Die Zentrierung 3b sorgt dafür, dass das in das Routenzugelement 1 eingeschobenen Transporthilfsmittel 35 ausgerichtet und positioniert wird. Die Endanschläge 3a sorgen dafür, dass das Transporthilfsmittel 35 während der Bewegung des Routenzugelements 1 nicht unkontrolliert gegen Teile des Fahrgestells 2 schlägt.

Die Hubvorrichtungen 8a, 8b können auf verschiedene Weise angetrieben werden. Neben dem pneumatischen, hydraulischen oder elektrischen Antrieb mittels Gewindespindel ist als weitere Alternative ein manuell-mechanischer Antrieb der Hubvorrichtungen 8a, 8b mittels einer Mehrzahl von Druckfeder vorgesehen.

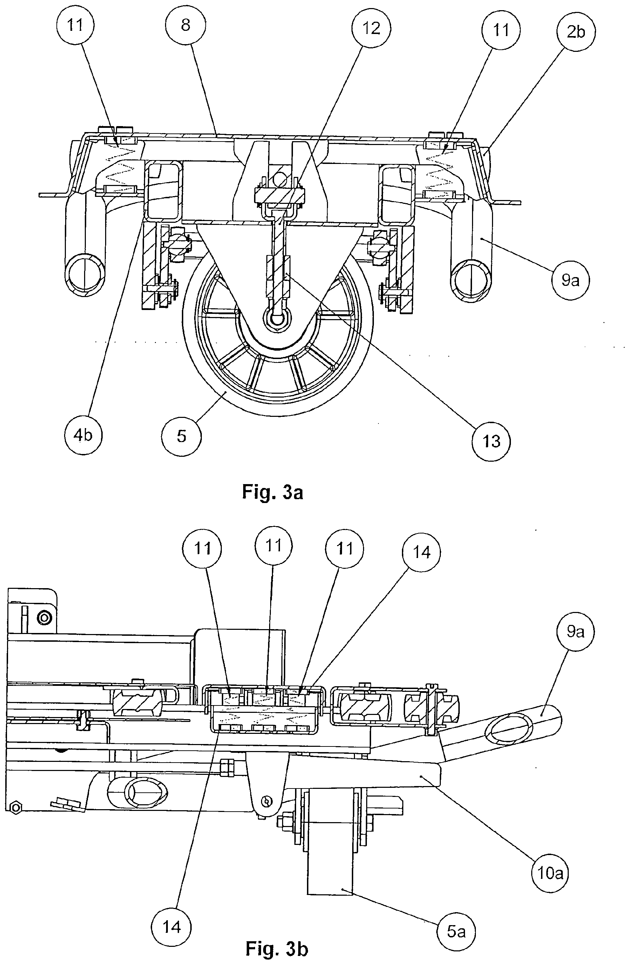

Die Hubvorrichtungen 8a, 8b bei dem in Fig. 1a gezeigten Routenzugelement 1 werden durch jeweils sechs Druckfedern 11, die unterhalb der Hubvorrichtungen 8a, 8b angeordnet sind (siehe Fig. 3b), angetrieben. Die Druckfedern werden mit Hilfe einer Spannvorrichtung 9 manuell komprimiert und dadurch aktiviert. Mit der Komprimierung der Druckfeder 11 ist die Absenkung der Hubvorrichtungen 8a, 8b verbunden. Nach Absenkung der Hubvorrichtungen 8a, 8b kann das Transporthilfsmittel 35 in das Routenzugelement 1 eingefahren werden. Nach dem Einfahren des Transporthilfsmittels 35 in das Routenzugelement 1 befindet sich der mittlere Fahrgestellabschnitt 2b unter dem Transporthilfsmittel 35, während der vordere Fahrgestellabschnitt 2a und der hintere Fahrgestellabschnitt 2c an der Vor- und Rückseite des Transporthilfsmittels 35 anliegen. Nach dem Einfahren wird das Transporthilfsmittel 35 in dem Routenzugelement 1 durch die Sicherung 33, welche den Sicherungshebel 33a und die endständig angeordneten Rollen 21 umfasst, gesichert. (Siehe Fig. 5)

Mit Hilfe des Auslösers 10 wird die Komprimierung der Druckfedern aufgehoben, wobei die Aufhebung der Komprimierung auch über gelagerte Anschlagelemente 10b ausgeführt sein können, welche durch das Einschieben eines Transporthilfsmittels 35 in das Fahrgestell 2 eines Routenzugelements 1 ausgelöst werden. Die Anschlagelemente 10b sind über eine Zugstange ähnlich der Zugstange 2b mit dem Bolzen 31 verbunden. In der Folge führen die Hubvorrichtungen 8a, 8b eine Vertikalbewegung nach oben aus und nehmen zumindest einen Teil des Gewichts des Transporthilfsmittels 35 auf, d.h. die Hubvorrichtungen 8a, 8b heben das Transporthilfsmittel 35 gewichtsentlastend an oder vollständig aus. Beim Ausheben berühren die Rollen des Transporthilfsmittels 35 den Boden nicht mehr.

Die Spannvorrichtung 9 und die Auslösevorrichtung 10 sind so aufgebaut, dass diese mit dem Fuß betätigt werden können. Während das Transporthilfsmittel 35 in das Routenzugelement 1 hinein bewegt wird, verhindern die am mittleren Fahrgestellabschnitt 2b seitlich montierten Rollen 34, dass das Transporthilfsmittel 35 verkantet oder hängen bleibt.

Fig. 1b zeigt das Routenzugelement 1 aus Fig. 1a mit einem in das Fahrgestell 2 des Routenzugelements 1 eingefahrenen Transporthilfsmittel 35, welches untenseitig Lenkrollen aufweist. Nach dem Einfahren wird das Transporthilfsmittel 35 in dem Routenzugelement 1 durch die Sicherung 33, welche den Sicherungshebel 33a und die endständig angeordneten Rollen 21 umfasst, gesichert. Die Sicherung des bereits vom Zentrierelement 3b zentrierten Transporthilfsmittels 35 erfolgt durch das Eingreifen der Rollen 21 in einen untenseitigen Freiraum des Transporthilfsmittels 35.

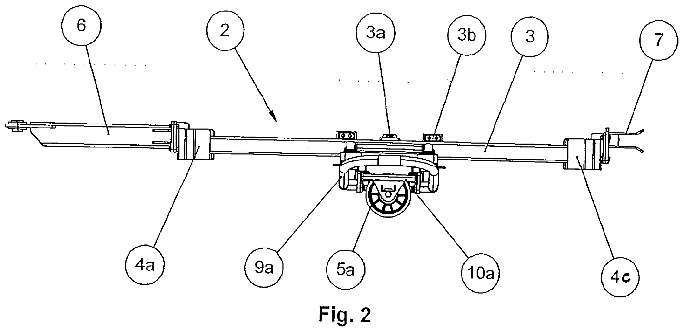

Fig. 2 zeigt das Routenzugelement 1 aus Fig. 1a in der Seitenansicht. Die Seitenansicht verdeutlicht, dass der obere Rand, bzw. die Oberseite des vorderen Fahrgestellabschnitts 2a, und dass der obere Rand, bzw. die Oberseite des hinteren Fahrgestellabschnitts 2c, keine Auflageflächen oder Teile aufweisen, welche eine gewichtsübertragende Aufnahme des Transporthilfsmittels 35 beim Anheben desselben ermöglichen. Die Gewichtsübertragung beim Anheben, bzw. beim kompletten Ausheben, des Transporthilfsmittels 35 erfolgt ausschließlich durch den mittleren Fahrgestellabschnitt 2b und die an diesem angeordneten Hubvorrichtungen 8a, 8b.

Die Darstellung in Fig. 2 zeigt deutlich, dass die Achsen der beiden im mittleren Fahrgestellabschnitt 2b angeordneten Räder 5a (gezeigt) und 5b (nicht gezeigt) auf einer Linie liegen. Somit weist das Routenzugelement 1 das Fahrverhalten eines einachsigen Anhängers auf.

Als Kupplungselemente zum Aufbau eines Zugs sind bei jedem Routenzugelement 1 am vorderen Fahrgestellabschnitt 2a die Deichsel 7 und am hinteren Fahrgestellabschnitt 2c die Anhängevorrichtung 8 angeordnet. Aufgrund dieser zueinander komplementären Kupplungselemente kann jedes Routenzugelement 1 im Verbund mit mehreren Wagen von einem Zugfahrzeug gezogen werden.

Fig. 3a zeigt den mittleren Fahrgestellabschnitt 2b im Querschnitt senkrecht zur Radachse. Fig. 3a dient der Veranschaulichung des Aufbaus und der Funktion der Hubvorrichtungen 8a, 8b.

Die in Fig. 3a gezeigten Hubvorrichtungen 8a, 8b weisen jeweils eine plattformartige Oberfläche auf. Die plattformartige Oberfläche kann jedoch aufgrund der unterhalb der Oberfläche angeordneten Druckfedern 11 eine Neigebewegung, bzw. eine Kippbewegung, nach links oder rechts, ausführen.

Insgesamt kann jede Hubvorrichtung 8a, 8b bis zu acht Druckfedern 11 umfassen. Die Druckfedern 11 drücken die Plattform der Hubvorrichtungen 8a, 8b permanent nach oben und heben dabei das Routenzugelement 1 gewichtsentlastend an oder heben das Routenzugelement 1 komplett aus. Ob das Routenzugelement 1 komplett ausgehoben wird, hängt von dessen Gewicht und von der Rückstellkraft und Anzahl der Druckfedern 11 ab. Somit sind die Hubkraft und die Hubhöhe der Hubvorrichtungen abhängig von den jeweils verbauten Druckfedern 11, wobei die Hubhöhe auch von der Länge der Ankerschraube 12 begrenzt wird. Die Schraube 12 wird untenends durch die Leiste 13 fixiert und dient als Zuganker. (Der Zweck und die Funktion und das Zusammenwirken der Leiste 13 mit den Ankerschrauben 12 wird in Zusammenhang mit Fig. 4 ausführlicher erläutert.)

Fig. 3b zeigt einen Querschnitt der Seitenansicht des mittleren Fahrgestellabschnitts 2b, wobei die Schnittlinie parallel zur Radachse verläuft.

Fig. 3b verdeutlicht die Art der Fixierung der zur Hubvorrichtung 8a bzw. 8b gehörenden Druckfedern 11. Fig. 3b zeigt drei von insgesamt 8 möglichen Druckfedern 11. Damit die Druckfedern 11 bei ihrer Aktivierung seitlich nicht verrutschen können, sind jeweils beide Endabschnitte der Druckfedern 11 auf die am mittleren Fahrgestellabschnitt 2b festgeschweißten Ringe 14 aufgesteckt.

Fig. 4 zeigt einen Querschnitt der Seitenansicht des mittleren Fahrgestellabschnitts 2b auf Höhe der Radachse zur Erläuterung der Funktion der Spannvorrichtung, welche die Aktivierung der Druckfeder 11 bewirkt.

Fig. 4 zeigt die mit dem Spannhebel 9a bedienbare Spannvorrichtung in der Seitenansicht. Zur Absenkung der Hubvorrichtungen 8a, 8b muss der durch die Spannhebelachse 22 drehbar Spannhebel 9a nach unten gedrückt werden. Der Spannhebel 9a betätigt im Inneren des mittleren Fahrgestellabschnitts 2b, vermittelt über eine Lasche 15, eine Hebelrolle 16a, welche ein erstes Kniehebelelement 16b und ein zweites Kniehebelelement 16c, die zusammen einen Kniehebel bilden, in eine sog. Kniehebelposition zwingen. In der Kniehebelposition sind die Hubvorrichtungen 8a, 8b abgesenkt, so dass ein Transporthilfsmittel 35 in das Routenzugelement 1 eingefahren werden kann, um von den Hubvorrichtungen 8a, 8b anschließend, nach dem Betätigen der Auslöservorrichtung 10, entweder gewichtsentlastend angehoben oder vollständig ausgehoben, zu werden.

Der Hebel 18 ist über die Achse 19 verbunden mit der Leiste 13, welche wiederum durch die Schrauben 12 mit den Hubvorrichtungen 8a, 8b verbunden ist. Aufgrund dieser Verbindung verhindert die Leiste 13, wenn die Hebelrolle 16a in der Kniehebelposition ist, die Hubbewegung der Hubvorrichtungen 8a, 8b in vertikale Richtung.

Fig. 5 zeigt einen Querschnitt der Seitenansicht des mittleren Fahrgestellabschnitts 2b parallel zur Radachse. Fig. 5 erläutert die Funktion der Sicherung des Transportmittels und verdeutlicht das Zusammenwirken des Spannhebels 9a mit der Sicherung 33.

Die Sicherung 33 dient der Fixierung des Transporthilfsmittels 35 im Routenzugelement 1. Beim Einschieben eines Transporthilfsmittels 35 werden die endständigen Rollen 21 des Sicherungshebels 33a über die Achse 20 schwenkbar gelagert, von der Unterseite des Transporthilfsmittels 35 nach unten verdrängt. Um dabei das Verkanten oder Einhaken der Sicherung 33 zu verhindern, weist der Sicherungshebel 33a obenseitig die beiden Rollen 21 auf.

Nachdem das Transporthilfsmittel 35 am Fahrgestell 2 des Routenzugelements 1 die Sicherung 33 vollständig überfahren und nachdem das Transporthilfsmittel 35 am Endanschlag 3a anliegt, kann der Sicherungshebel 33a mit den Rollen 21 in einen Hohlraum auf der Unterseite des Transporthilfsmittels 35 eingreifen. In dieser Stellung wirkt keine Kraft mehr von oben auf die Sicherung 33, so dass der Hebelarm des Sicherungshebels 33a der Sicherung 33 unter der Wirkung der Druckfeder 24 wieder in die Ausgangsstellung schwenkt. Die Druckfeder 24 liegt sowohl an einem Arm der Sicherung 33 und am Holm 4b des mittleren Fahrgestellabschnitts 2b an. Sobald die Sicherung 33 in der Sicherungsposition arretiert ist, kann das Transporthilfsmittel 35 nicht mehr aus dem Routenzugelement 1 ausfahren.

Zur Freigabe des Transporthilfsmittels 35 muss der Spannhebel 9a gedrückt werden. Bei Betätigen des Spannhebels 9a schwenkt dieser um die Spannhebelachse 22 und hebt den rechtsständigen Teil des Sicherungshebels 33a aufgrund der Kopplung durch den Bolzen 23 ebenfalls nach oben. Durch das Anheben des Bolzens 23 wird der endständige Abschnitt des über die Achse 20 ebenfalls drehbar gelagerten Hebelarms des Sicherungshebels 33a der Sicherung 33 nach unten geschwenkt, so dass die zur Sicherungsvorrichtung 33 gehörenden Rollen 21 keine das Transporthilfsmittel 35 zurückhaltende Störkontur mehr bilden. Die Spannvorrichtung 9 wird durch die Fußbetätigung des Spannhebels 9a permanent in seiner Ausgangslage gehalten, wobei die Ausgangslage des Spannhebels 9a der in Fig. 5 gezeigten Stellung entspricht.

Fig. 6a zeigt den mittleren Fahrgestellabschnitts 2b im Seitenbild zur Veranschaulichung der Wirkungsweise der Auslösevorrichtung 10.

Bei Betätigung des um die Achse 27 drehbar gelagerten Auslösers 10a, bzw. bei Betätigung der Anschlagelemente 10b, die durch das Einschieben eines Transporthilfsmittels 35 aktiviert werden, wird die Zugstange 26, welche mit der Lasche 29 über die Achse 32 verbunden ist, bewegt. Durch die Bewegung der Zugstange 26 schwenkt die Lasche 29 über die Achse 28 und betätigt, d.h. verdrängt, über die Lasche 29, die auf dem Bolzen 31 montierte Rolle 30. Der Bolzen 31 wird in einer Nut, die einen Radius beschreibt, geführt. Durch diese Führung wird die Achse 22 der Bolzen 31 nahezu horizontal in Richtung des Auslösers 10a gezogen und hebt die Kniehebelposition (siehe Erläuterung von Fig. 4) des Kniehebelelements 16b und des Kniehebelelements 16c Lasche 15 und Lasche 16, bzw. die Kniehebelposition der Kniehebelvorrichtung 16 des Hebels 17 sowie die Kniehebelposition des Hebels 18 (siehe Fig. 4 sowie Fig.6b) auf.

Fig. 6b zeigt die Schnittansicht des mittleren Fahrgestellabschnitts 2b im Querschnitt zur Darstellung der Wirkungsweise der Auslösevorrichtung 10 und zur Erläuterung des durch die Druckfedern 11 bewirkten Hubvorgangs nach Betätigung des Auslösers 10a, bzw. Anschlagelemente 10b, die durch das Einschieben eines Transporthilfsmittels 35 aktiviert werden,

Wie in Fig. 6a erläutert, hebt die Betätigung des Auslösers 10a die Kniehebelposition des Hebels 17 sowie die Kniehebelposition der Kniehebelvorrichtung 16 des Hebels 18 auf, weil durch die Betätigung des Auslösers 10a, bzw. Anschlagelemente 10b, die durch das Einschieben eines Transporthilfsmittels 35 aktiviert werden, die Achse 32 in die Richtung des seitlichen offenen Bereichs des Fahrgestells 2 gezogen wird und in der Folge der Hebel 18 die Achse 19 vertikal nach oben zieht. Da die Leiste 13 mit der Achse 19 verbunden ist, wird auch für die Leiste 13 die Bewegung nach oben freigegeben.

Die Bewegung der Leiste 13 vertikal nach oben erfolgt unter der Einwirkung der Federkraft der zu den Hubvorrichtungen 8a, 8b gehörenden Druckfedern 11, wobei die Aufwärtsbewegung der Hubvorrichtungen 8a, 8b wiederum durch die Länge der Schrauben 12 begrenzt wird. In dieser Position sind die Hubvorrichtungen 8a, 8b in vertikaler Richtung ausgefahren und heben das Transporthilfsmittel 35 an. Während der genannten Aufwärtsbewegung wird die Hebelrolle 16a wieder in Richtung der Lasche 15 geführt.

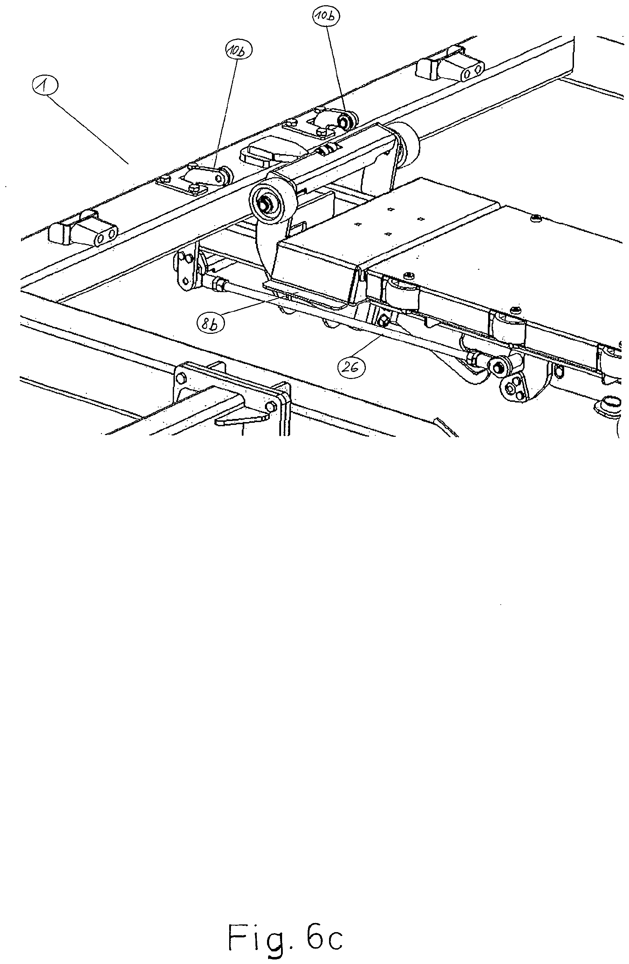

Fig. 6c zeigt den mittleren Fahrgestellabschnitt in perspektivischer Darstellung.

Bei der in Fig. 6c gezeigten Ausführungsform wird die Betätigung der Auslösevorrichtung, d.h. die Entriegelung der Auslösevorrichtung, durch die drehbar angeordneten Anschlagelemente 10b bewirkt. Ausgelöst wird die Drehbewegung der Anschlagelemente 10b durch den von der Rückseite des Transporthilfsmittels ausgehenden Anpressdruck beim Einschieben des Transporthilfsmittels in das Routenzugelement 1. Ihrer Funktion entsprechend können die Anschlagelemente 10b alternativ auch als Drehauslöser bezeichnet werden.

Die Drehbewegung der drehbar angeordneten Anschlagelemente 10b wird durch die Stange 26 übertragen und bewirkt die Entriegelung der Auslösevorrichtung, welche die Entspannung der im Inneren der beiden Hubvorrichtungen 8a, 8b angeordneten Druckfedern auslöst. In der Folge wird durch die Druckfedern eine zumindest teilweise Anhebung des in das Routenzugelement 1 eingefahrenen Transporthilfsmittels bewirkt.

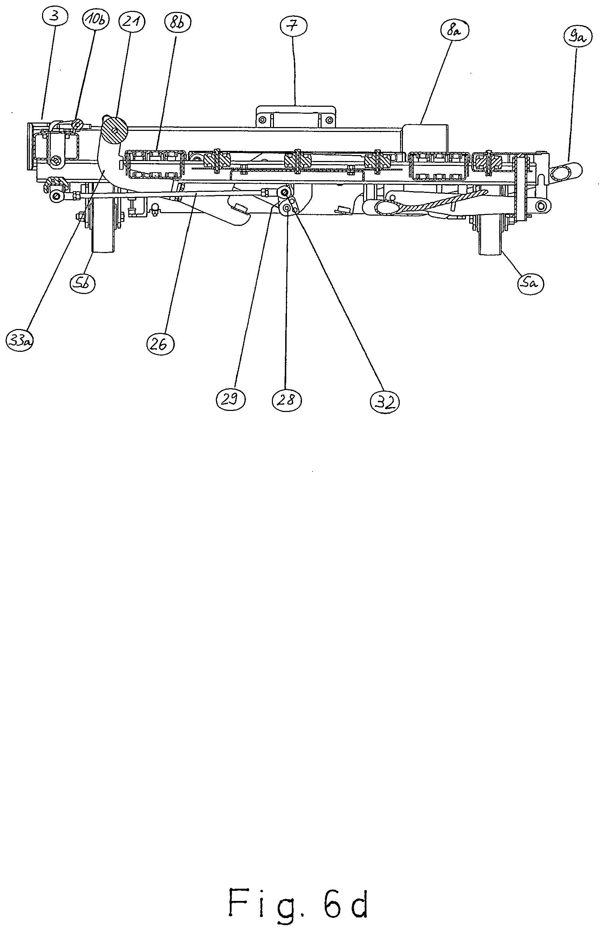

Fig. 6d zeigt einen Querschnitt der Seitenansicht des mittleren Fahrgestellabschnitts 2b, wobei die Schnittlinie parallel zur Radachse verläuft.

Die in Fig. 6d gezeigte Ausführungsform zeichnet sich durch die beiden im Bereich des Längsholms 3 angeordneten Anschlagelemente 10b aus. (Da es sich bei Fig. 6d um eine Querschnittsansicht handelt, ist nur das vordere Anschlagelement 10b zu sehen.)

Bei der in Fig. 6d gezeigten Ausführungsform ersetzen die Anschlagelemente 10b in ihrer Funktion und Wirkung den Auslöser 10a, der die in Fig. 6a gezeigte Ausführungsform kennzeichnet. Bei der in Fig. 6d gezeigten Ausführungsform werden die drehbar angeordneten Anschlagelemente 10b beim Einschieben eines Transporthilfsmittels in die Richtung des Längsholms 3 verdrängt. Die mit der Verdrängung verbundene Drehung der Anschlagelemente 10b wird durch die Stange 26, die jeweils anderenends mit den Anschlagelementen 10b verbunden ist, auf die Hubvorrichtungen 8a, 8b übertragen und löst dadurch in den Hubvorrichtungen 8a, 8b den Hubvorgang aus.

### Bezugszeichenliste

- 1: Routenzugelement

- 2: Fahrgestell (E-Frame-Fahrgestell)
- 2a: vorderer Fahrgestellabschnitt
- 2b: mittlerer Fahrgestellabschnitt
- 2c: hinterer Fahrgestellabschnitt

- 3: Längsholm des Fahrgestells
- 3a: Endanschlag am Längsholm
- 3b: Zentrierungselement am Längsholm

- 4: Querholme des Fahrgestells
- 4a: vorderer Querholm
- 4b: mittlerer Querholm
- 4c: hinterer Querholm

- 5: Räder des Routenzugelements
- 5a: erstes Rad
- 5b: zweites Rad

- 6: Deichsel
- 7: Anhängevorrichtung

- 8: Hubvorrichtung
- 8a: erste Hubvorrichtung
- 8b: zweite Hubvorrichtung

- 9: Spannvorrichtung
- 9a: Spannhebel
- 10: Auslösevorrichtung
- 10a: Auslöser der Hubvorrichtung
- 10b: Anschlagelement
- 11: Druckfedern zum Antrieb der Hubvorrichtung
- 12: Ankerschraube
- 13: Anschlagleiste
- 14: Ring
- 15: Lasche

- 16: Kniehebelvorrichtung
- 16a: Hebelrolle
- 16b: erstes Kniehebelelement
- 16c: zweites Kniehebelelement
- 17: Hebel
- 18: Hebel
- 19: Achse
- 20: Achse
- 21: Rolle
- 22: Spannhebelachse
- 23: Bolzen
- 24: Druckfeder
- 25: Feder
- 26: Zugstange
- 27: Achse
- 28: Achse
- 29: Lasche
- 30: Rolle
- 31: Bolzen
- 32: Achse

- 33: Transporthilfsmittel-Sicherung
- 33a: Sicherungshebel mit endständiger Rolle 21
- 34: Rolle (Leitrollen an den Längsseiten des mittleren Fahrgestells)
- 35: Transporthilfsmittel

## Patentansprüche

1. Routenzugelement (1) mit einem auf einer der beiden Längsseiten zumindest abschnittsweise offenen Fahrgestell (2), in das auf der abschnittsweise offenen Längsseite ein fahrbares Transporthilfsmittel (35) eingefahren werden kann, und welches
- einen Längsholm (3), der parallel zur mittigen Längsachse des Routenzugelements (1) angeordnet ist, und
- mindestens drei Querholme (4a, 4b, 4c), die beabstandet voneinander in jeweils senkrechter Richtung mit dem Längsholm (3) verbunden sind und die so einen vorderen (2a), einen mittleren (2b) und einen hinteren Fahrgestellabschnitt (2c) bilden, wobei der mittlere Fahrgestellabschnitt (2b) zwei oder mehrere Räder (5a, 5b), deren Achsen auf einer Linie liegend senkrecht zur Längsachse des Routenzugelements (1) angeordnet sind, und
- mindestens eine Hubvorrichtung (8) zum Anheben eines Transporthilfsmittels (35) aufweist,
wobei der vordere Fahrgestellabschnitt (2a) und der hintere Fahrgestellabschnitt (2c) so angeordnet sind, dass beide bei einem in das Routenzugelement (1) eingefahrenen Transporthilfsmittel (35) im Bereich der Seitenflächen des Transporthilfsmittels positioniert sind, so dass weder der vordere Fahrgestellabschnitt (2a) noch der hintere Fahrgestellabschnitt (2c) an dem Hubvorgang, der allein durch die im mittleren Fahrgestellabschnitt (2b) angeordnete Hubvorrichtung (8) bewirkt wird, beteiligt sind,
**dadurch gekennzeichnet, dass**
der vordere Fahrgestellabschnitt (2a) und der hintere Fahrgestellabschnitt (2c) so angeordnet sind, dass beide bei dem in das Routenzugelement (1) eingefahrenen Transporthilfsmittel (35) ausschließlich oberhalb der Unterseite des Transporthilfsmittels (35) im Bereich der Seitenflächen des Transporthilfsmittels positioniert sind, wobei der Antrieb der Hubvorrichtung (8), bzw. der Hubvorrichtungen (8a, 8b), mittels einer oder mehrerer Druckfedern (11) erfolgt, wobei die Druckfedern (11) so angeordnet sind, dass sie mittels einer durch Muskelkraft bedienbaren Spannvorrichtung (9) komprimierbar sind.

2. Routenzugelement (1) nach Anspruch 1, **dadurch gekennzeichnet, dass** auf der Längsachse des Fahrgestells (2) liegend an dem vorderen Fahrgestellabschnitt (2a) eine Deichsel (6) und an dem hinteren Fahrgestellabschnitt (2c) eine Anhängevorrichtung (7) angeordnet ist.

3. Routenzugelement (1) nach Anspruch 1 oder nach Anspruch 2, **dadurch gekennzeichnet, dass** im Bereich des mittleren Fahrgestellabschnitts (2b) beabstandet voneinander zwei oder mehrere Hubvorrichtungen (8a, 8b) angeordnet sind.

4. Routenzugelement nach einem der Ansprüche 1 bis 3, **dadurch gekennzeichnet, dass** im Bereich des mittleren Fahrgestellabschnitts (2b) beabstandet voneinander zwei Hubvorrichtungen (8a, 8b) angeordnet sind, wobei für den Antrieb jeder Hubvorrichtung (8a, 8b) jeweils zwei bis acht Druckfedern (11) vorgesehen sind.

5. Routenzugelement nach einem der Ansprüche 1 bis 4, **dadurch gekennzeichnet, dass** die durch Muskelkraft bedienbare Spannvorrichtung (9), die der Kompression der zu den Hubvorrichtungen (8a, 8b) gehörenden Druckfedern (11) dient,
- einen Spannhebel (9a), der als Hebelarm auf der Spannhebelachse (22) drehbar gelagert ist,
- eine Anschlagleiste (13), die in vertikale Richtung beweglich angeordnet ist, und
- zwei oder mehrere Ankerschrauben (12), welche die Bewegung der Anschlagleiste (13) in vertikale Richtung begrenzen,
- sowie die Lasche (15), die Kniehebelvorrichtung (16), den Hebel (17) und den durch die Achse (19) an der Anschlagleiste (13) drehbar angeordneten Hebel (18) aufweist.

6. Routenzugelement nach einem der Ansprüche 1 bis 5, **dadurch gekennzeichnet, dass** im mittleren Fahrgestellabschnitt (2b) des Routenzugelements (1) eine Transporthilfsmittel-Sicherung (33) angeordnet ist, wobei die Sicherung (33) einen Sicherungshebel (33a), der im Bereich seines mittleren Abschnitts auf einer Achse (20) drehbar gelagert ist, umfasst, und
- wobei der erste Endabschnitt des Sicherungshebels (33a) durch den Bolzen (23) drehbar mit einem Endabschnitt des auf der Achse (22) ebenfalls drehbar gelagerten Spannhebels (9a) verbunden ist, und
- der zweite freie Endabschnitt des Sicherungshebels (33a) eine oder mehrere Rollen (21), die bei Aktivierung der Sicherung (33) in einen Freiraum auf der Unterseite eines Transporthilfsmittels (35), das in das Routenzugelement (1) eingefahren ist, einzugreifen bestimmt sind, aufweist.

7. Routenzugelement nach einem der Ansprüche 1 bis 6, **dadurch gekennzeichnet, dass** im mittleren Fahrgestellabschnitt (2b) des Routenzugelements (1) eine Auslösevorrichtung (10) zur Auslösung des Hubvorgangs angeordnet ist, wobei die Auslösevorrichtung (10)
- einen um die Achse (27) drehbar gelagerten und mittels Muskelkraft betätigbaren Auslöser (10a), oder
- mindestens ein im Bereich des Längsholms (3) drehbar gelagertes Anschlagelement (10b), das unter dem Anpressdruck der Rückseite eines in das Routenzugelement (1) eingeschobenen Transporthilfsmittels (35) betätigbar ist, sowie
- eine jeweils mit dem Auslöser (10a) oder dem Anschlagelement (10b) verbundene Zugstange (26), die anderenends durch die Achse (32) mit der Lasche (29) verbunden ist, umfasst.

8. Routenzugelement nach einem der vorhergehenden Ansprüche, **dadurch gekennzeichnet, dass** die Hubvorrichtung (8), bzw. die Hubvorrichtungen (8a, 8b), obenseitig mit einem schalldämpfenden Material belegt sind.

## Claims

1. Route tie element (1) with a carriage (2) which is at least in sections open at one of the both longitudinal sides, in which a mobile transportation auxiliary means (35) can run into the in sections open longitudinal side, and which comprises
- a longitudinal bar (3), which is arranged parallel to the central longitudinal axis of the route tie element (1), and
- at least three transversal bars (4a, 4b, 4c) which are connected with the longitudinal bar (3) remote from another in each vertical direction and which so form a front (2a), a central (2b) and a rear carriage section (2c), wherein the central carriage section (2b) comprises two or more wheels (5a, 5b) which axis are arranged on a line perpendicular to the longitudinal axis of the route tie element (1), and
- at least one lifting device (8) for lifting of a transportation auxiliary means (35),
wherein the front carriage section (2a) and the rear carriage section (2c) are arranged in such a manner that both are positioned in the region of the side areas of the transportation auxiliary means when the transportation auxiliary means (35) being arranged in the route tie element (1), so that neither the front carriage section (2a) nor the rear carriage section (2c) are involved in the lifting process which is only caused by the lifting device (8) which is arranged in the central carriage section (2b),
**characterized in that**
the front carriage section (2a) and the rear carriage section (2c) are arranged in such a manner that both are positioned exclusively above the bottom side of the transportation auxiliary means (35) in the region of the side areas of the transportation auxiliary means when the transportation auxiliary means (35) being arranged in the route tie element (1), wherein the drive of the lifting device (8) and the lifting devices (8a, 8b) respectively occurs by means of one or more compression springs (11), wherein the compression springs (11) are arranged in such a manner that they can be compressed by a clamping device (9) which can be operated by muscular strength.

2. Route tie element (1) according to claim 1, **characterized in that** a drawbar (6) is arranged at the front carriage section (2a) and a hanger device (7) is arranged at the rear carriage section (2c) laying on the longitudinal axis of the carriage (2).

3. Route tie element (1) according to claim 1 or according to claim 2, **characterized in that** in the region of the central carriage section (2b) two or more lifting devices (8a, 8b) are arranged remote from another.

4. Route tie element according to one of claims 1 to 3, **characterized in that** in the region of the central carriage section (2b) two lifting devices (8a, 8b) are arranged remote from another, wherein for the drive of each lifting device (8a, 8b) each two to eight compression springs (11) are provided.

5. Route tie element according to one of claims 1 to 4, **characterized in that** the clamping device (9) which is operated by muscular strength, which serves for the compression of the compression spring (11) belonging to the lifting devices (8a, 8b), comprise:
- a clamping lever (9a), which is as lever arm rotatable supported on the axis of the clamping lever (22),
- a stopping ledge (13), which is movable arranged in vertical direction, and
- two or more anchor bolts (12) which limit the movement of the stopping ledge (13) in vertical direction,
- as well as the flap (15), the toggle lever device (16), the lever (17) and the lever (18) which is rotatable arranged at the stopping ledge (13) by the axis (19).

6. Route tie element according to one of claims 1 to 5, **characterized in that** in the central carriage section (2b) of the route tie element (1) a lock for transportation auxiliary means (33) is arranged, wherein the lock (33) comprises a locking lever (33a) which is rotatable supported in the region of its central section on an axis (20), and
- wherein the first end section of the locking lever (33a) is rotatable connected with the end section of the clamping lever (9a) by the bolt (23) which clamping lever is also rotatable supported on the axis (22), and
- the second free end section of the locking lever (33a) comprises one or more rolls (21) which are to be engaged at activating of the lock (33) into a space at the bottom side of a transportation auxiliary means (35) which is driven into the route tie element (1).

7. Route tie element according to one of claims 1 to 6, **characterized in that** in the central carriage section (2b) of the route tie element (1) a tripping device (10) is arranged for tripping of the lifting process, wherein the tripping device (10) comprises
- a trigger (10a) which is rotatable supported around the axis (27) and which is activatable by muscular strength, or
- at least one in the region of the longitudinal bar (3) rotatable supported stopper element (10b) which is activatable by the contact pressure of the backside of a transportation auxiliary means (35) which is pushed into the route tie element (1), as well as
- a tie rod (26) which is each connected with the trigger (10a) or the stopper element (10b) and which at the other end is connected with the flap (29) by the axis (32).

8. Route tie element according to one of the preceding claims, **characterized in that** the lifting device (8) and the lifting devices (8a, 8b) respectively are covered at the upper side with a sound absorbing material.

## Revendications

1. Elément de train de remorques (1) avec un châssis (2) ouvert au moins en partie sur un des deux côtés longitudinaux, dans lequel un accessoire de transport mobile (35) peut être introduit sur le côté longitudinal ouvert en partie, et qui présente
- un longeron (3) qui est disposé parallèlement à l'axe longitudinal médian de l'élément de train de remorques (1), et
- au moins trois traverses (4a, 4b, 4c), qui sont assemblées au longeron (3), à distance l'une de l'autre, dans une direction respectivement perpendiculaire et qui forment ainsi une partie de châssis avant (2a), moyenne (2b) et arrière (2c), dans lequel la partie de châssis moyenne (2b) présente deux ou plusieurs roues (5a, 5b), dont les axes sont disposés sur une ligne située perpendiculairement à l'axe longitudinal de l'élément de train de remorques (1), et
- au moins un dispositif de levage (8) pour le levage d'un accessoire de transport (35),
dans lequel la partie de châssis avant (2a) et la partie de châssis arrière (2c) sont disposées de telle manière que, lorsqu'un accessoire de transport (35) est introduit dans l'élément de train de remorques (1), les deux soient positionnées dans la région des faces latérales de l'accessoire de transport, de telle manière que ni la partie de châssis avant (2a) ni la partie de châssis arrière (2c) ne participent à l'opération de levage, qui n'est effectuée que par le seul dispositif de levage (8) disposé dans la partie de châssis moyenne (2b),
**caractérisé en ce que** la partie de châssis avant (2a) et la partie de châssis arrière (2c) sont disposées de telle manière que, lorsque l'accessoire de transport (35) est introduit dans l'élément de train de remorques (1), les deux soient positionnées exclusivement au-dessus du côté inférieur de l'accessoire de transport (35) dans la région des faces latérales de l'accessoire de transport, dans lequel l'entraînement du dispositif de levage (8), ou des dispositifs de levage (8a, 8b), est effectué au moyen d'un ou de plusieurs ressort (s) de pression (11), dans lequel les ressorts de pression (11) sont disposés de telle manière qu'ils puissent être comprimés au moyen d'un dispositif de serrage (9) actionnable par la force musculaire.

2. Elément de train de remorques (1) selon la revendication 1, **caractérisé en ce qu'**un timon (6) est disposé sur la partie de châssis avant (2a) et un dispositif d'attelage (7) est disposé sur la partie de châssis arrière (2c) en étant situés sur l'axe longitudinal du châssis (2).

3. Elément de train de remorques (1) selon la revendication 1 ou la revendication 2, **caractérisé en ce que** deux ou plusieurs dispositifs de levage (8a, 8b) sont disposés à distance l'un de l'autre dans la région de la partie de châssis moyenne (2b).

4. Elément de train de remorques selon l'une quelconque des revendications 1 à 3, **caractérisé en ce que** deux dispositifs de levage (8a, 8b) sont disposés à distance l'un de l'autre dans la région de la partie de châssis moyenne (2b), dans lequel il est prévu pour l'entraînement de chaque dispositif de levage (8a, 8b) respectivement deux à huit ressorts de pression (11).

5. Elément de train de remorques selon l'une quelconque des revendications 1 à 4, **caractérisé en ce que** le dispositif de serrage (9) actionnable par la force musculaire, qui sert pour la compression des ressorts de pression (11) faisant parie des dispositifs de levage (8a, 8b), présente
- un levier de serrage (9a), qui est monté de façon rotative en tant que bras de levier sur l'axe (22) du levier de serrage,
- une barre de butée (13), qui est mobile en direction verticale, et
- deux ou plusieurs vis d'ancrage (12), qui limitent le mouvement de la barre de butée (13) en direction verticale,
- ainsi que la patte (15), le dispositif de levier articulé (16), le levier (17 et le levier (18) disposé de façon rotative au moyen de l'axe (19) sur la barre de butée (13).

6. Elément de train de remorques selon l'une quelconque des revendications 1 à 5, **caractérisé en ce qu'**une sécurité de l'accessoire de transport (33) est disposée dans la partie de châssis moyenne (2b) de l'élément de train de remorques (1), dans lequel la sécurité (33) comprend un levier de sécurité (33a), qui est monté de façon rotative sur un axe (20) dans la région de sa partie moyenne, et
- dans lequel la première partie d'extrémité du levier de sécurité (33a) est reliée de façon rotative par le boulon (23) à une partie d'extrémité du levier de serrage (9a) également monté de façon rotative sur l'axe (22), et
- la deuxième partie d'extrémité libre du levier de sécurité (33a) présente un ou plusieurs rouleaux (21) qui lors de l'activation de la sécurité (33) sont destinés à s'engager dans un espace libre sur le côté inférieur de l'accessoire de transport (35), qui est introduit dans l'élément de train de remorques (1).

7. Elément de train de remorques selon l'une quelconque des revendications 1 à 6, **caractérisé en ce qu'**un dispositif de déclenchement (10) pour le déclenchement de l'opération de levage est disposé dans la partie de châssis moyenne (2b) de l'élément de train de remorques (1), dans lequel le dispositif de déclenchement (10) comprend
- un déclencheur (10a) monté de façon rotative autour de l'axe (27) et actionnable au moyen de la force musculaire, ou
- au moins un élément de butée (10b) monté de façon rotative dans la région du longeron (3), qui est actionnable sous la pression de poussée du côté arrière d'un accessoire de transport (35) inséré dans l'élément de train de remorques (1), ainsi que
- une barre de traction (26) reliée respectivement au déclencheur (10a) ou à l'élément de butée (10b), qui est reliée par l'autre extrémité à la patte (29) au moyen de l'axe (32).

8. Elément de train de remorques selon l'une quelconque des revendications précédentes, **caractérisé en ce que** le dispositif de levage (8), ou les dispositifs de levage (8a, 8b), est/sont muni(s) sur le côté supérieur d'un matériau insonorisant.
